# EUROPÄISCHE PATENTANMELDUNG

(11) **EP 0 784 178 A1**
(43) Veröffentlichungstag der Anmeldung: **16.07.1997**
(21) Anmeldenummer: 96113719.7
(22) Anmeldetag: 28.08.1996
(51) Int. Cl.: F16L 5/10, F16L 5/02, H02G 15/013

(54) **Vorrichtung zum Abdichten eines Schutzrohres**

(30) Priorität: 03.02.1996 DE 19603914; 11.01.1996 DE 19600751
(71) Anmelder: Hauff, Werner, D-89561 Ballmertshofen (DE)
(72) Erfinder: Gauland, Gerhard, 89520 Heidenheim (DE); Hauff, Werner, 89561 Ballmertshofen (DE); Seifried, Ernst, 86507 Kleinaitingen (DE)
(74) Vertreter: Fay, Hermann, Dipl.-Phys. Dr.

(57) **Zusammenfassung**

Die Erfindung betrifft eine Vorrichtung zum Abdichten eines Schutzrohres (2) gegen eine durch das Schutzrohr (2) führende Leitung (3). Die Vorrichtung weist eine das Schutzrohr (2) am Rohrende mit der Leitung (3) verbindenden Schrumpfmuffe (1), wobei die Schrumpfmuffe (1) einen Kaltschrumpfschlauch (4) umfaßt, der am einen Ende außen auf dem Schutzrohr (2) sitzt. Der Kaltschrumpfschlauch (4) ist am anderen Ende umgestülpt und das umgestülpte Ende (5) gleitfähig auf dem nicht umgestülpten Ende des Kaltschrumpfschlauches gelagert.

## Beschreibung

Die Erfindung betrifft eine Vorrichtung zum Abdichten eines Schutzrohres gegen eine durch das Schutzrohr führende Leitung, wie Rohr, Kabel oder dergl., mit einer das Schutzrohr am Rohrende mit der Leitung verbindenden Schrumpfmuffe, insbesondere bei einer Vorrichtung zum Abdichten eines Schutzrohres zur Durchführung der Leitung durch eine Wandöffnung, wobei das Schutzrohr ein in die Wandöffnung einsetzbares Futterrohr ist.

Eine derartige Vorrichtung ist beispielsweise in der nicht zum vorveröffentlichten Stand der Technik zählenden deutschen Patentanmeldung P 195 34 484.7 beschrieben, bei der allerdings die Schrumpfmuffe auf einem in das Rohrende des Schutzrohres eingeführtem Einsatzteil angeordnet ist.

Schrumpfmuffen gibt es in konventioneller Ausführung mit Schrumpfschläuchen, die einer Wärmebehandlung bedürfen, die innerhalb eines definierten Temperaturintervall ausgeführt werden muß, wozu am Montageort eine Wärmequelle notwendig ist. Außerdem gibt es Kaltschrumpfmuffen mit einem Kaltschrumpfschlauch. Diese bieten den Vorteil, daß nach der Montage auf eine Wärmebehandlung verzichtet werden kann.

Bei bekannten Kaltschrumpfmuffen wird der Kaltschrumpfschlauch im vorgedehnten Zustand auf einer Stützwendel geliefert, die bei der Montage drehend herausgezogen wird, wobei sich der Kaltschrumpfschlauch entspannt und seinen ursprünglichen Zustand wieder einnimmt. Problematisch dabei ist, daß eine zuverlässige Abdichtung nicht immer erreicht wird, da beim Einziehen des Installationsmaterials der auf Baustellen häufig vorhandene Schmutz in den Innenraum der Kaltschrumpfmuffe hineingetragen und in dieser beim Herausziehen der Stützwendel verteilt wird. Die Spirale der Stützwendel stört beim Einziehen des Installationsmaterials und muß nach Entfernen aus der Kaltschrumpfmuffe als Abfall entsorgt werden, so daß der Gesamtanteil des Abfalls recht hoch ist. Bei der Installation von Kabeln erfolgt keine zuverlässige Abdichtung von Längsriefen des Kabelmantels, weil eine zusätzliche Innenbeschichtung in die Kaltschrumpfmuffe nicht eingebracht werden kann.

Der Erfindung liegt die Aufgabe zugrunde, eine Vorrichtung der eingangs genannten Art so auszubilden, daß deren Handhabung vereinfacht und die Installation ohne weitere Hilfsmittel ausgeführt werden kann.

Diese Aufgabe wird erfindungsgemäß dadurch gelöst, daß die Schrumpfmuffe einen Kaltschrumpfschlauch aufweist, der am einen Ende außen auf dem Schutzrohr sitzt, daß der Kaltschrumpfschlauch am anderen Ende umgestülpt und das umgestülpte Ende gleitfähig auf dem nicht umgestülpten, außen auf dem Schutzrohr sitzenden Ende des Kaltschrumpfschlauches gelagert ist. Dadurch ergibt sich der Vorteil, daß die durch das Schutzrohr durchgeführte Leitung von Verschmutzungen gereinigt werden kann, bevor die Stelle, an der der Kaltschrumpfschlauch später anliegt, von diesem verdeckt wird, was sich bezüglich der Dichtigkeit der Verbindung von Schutzrohr und Leitung günstig auswirkt. Weiterhin fällt außerdem kein Abfall an, der nach der Montage entsorgt werden müßte.

Da der Kaltschrumpfschlauch gedehnt ist und unter mechanischer Spannung steht, kann das Zurückstülpen des umgestülpten Endes problematisch sein, insbesondere wenn aufgrund des Materials des Kaltschrumpfschlauches die Reibung zwischen dessen Enden groß ist. Daher ist es vorteilhaft, wenn zwischen dem umgestülpten und dem nicht umgestülpten Ende des Kaltschrumpfschlauches ein Gleitmittel angeordnet ist.

Nach einer bevorzugten Ausführungsform der Erfindung ist das umgestülpte Ende zwischen zwei Hülsen gleitfähig gelagert, die an der dem Rohrende abgewandten Seite miteinander verbunden sind. Dadurch ergibt sich der Vorteil, daß der Kaltschrumpfschlauch in einer sehr kompakten Einheit gelagert und dort vor Verschmutzungen geschützt ist. Die Hülsen dienen gleichfalls dazu, den Kaltschrumpfschlauch aus der umgestülpten Anordnung in eine gestreckte Lage zurückzustülpen. Sie stellen keinen Abfall dar, sondern werden nach der richtigen Positionierung des Kaltschrumpfschlauches in ihre ursprüngliche Lage zurückgeschoben und bieten zusätzlichen mechanischen Schutz für die Verbindungsstelle.

Eine insbesondere wegen der Einfachheit der Fertigung bevorzugte Ausführungsform ist dadurch gekennzeichnet, daß die Hülsen durch einen Ring miteinander verbunden und der Ring sowie die Hülsen einstückig ausgeführt sind.

Eine Erhöhung der Dichtigkeit der Verbindung zwischen Schutzrohr und Kaltschrumpfschlauch wird dadurch erreicht, daß der dem Schutzrohr anliegende Teil des Kaltschrumpfschlauches durch einen Kleber fest mit dem Schutzrohr verklebt ist.

Es ist bevorzugt, wenn die äußere Hülse auf der Seite des Rohrendes über die innere Hülse übersteht, da so der Kaltschrumpfschlauch an der Stelle, wo er durch die Umstülpung besonders stark gedehnt ist, zusätzlich vor mechanischen Belastungen geschützt wird.

Dieser Schutz läßt sich noch dadurch verstärken, indem in die äußere Hülse ein am Rohrende anliegender Abdeckring eingesetzt ist. Dieser Abdeckring bietet zugleich einen weiteren Schutz vor Verschmutzung des Kaltschrumpfschlauches.

Im Rahmen der Erfindung ist weiterhin vorgesehen, daß auf dem umgestülpten Teil des Kaltschrumpfschlauches auf der im umgestülpten Zustand dem Schutzrohr abgewandten Seite eine Dichtmasse angeordnet ist. Diese Dichtmasse sorgt nochmals für eine Erhöhung der Dichtigkeit und ist insbesondere geeignet, in kleine Vertiefungen und Riefen in der Oberfläche der Leitungen einzudringen.

Um ein Verkleben der Dichtmasse mit der äußeren Hülse zu vermeiden, ist es vorgesehen, daß zwischen der Dichtmasse und der äußeren Hülse eine Abdeckfolie angeordnet ist, die mindestens an der dem Abdeckring zugewandten Seite der äußeren Hülse fest mit dieser verbunden ist. Die feste Verbindung ist notwendig, damit beim Herausziehen der Hülsen zum Umstülpen des Kaltschrumpfschlauches die Abdeckfolie von diesem abgezogen werden kann, so daß die Dichtmasse freigeben wird.

Vorteilhaft bei der Erfindung ist gleichfalls, daß bei Einsatz des Schutzrohres in die Wandöffnung der Abdeckring mit der äußeren Hülse eine Sichtblende bildet, so daß diesem nicht nur eine mechanische Schutzfunktion sondern auch eine ästhetische Wirkung zukommt.

Im folgenden wird die Erfindung an einem in der Zeichnung dargestellten Ausführungsbeispiel näher erläutert; es zeigen:

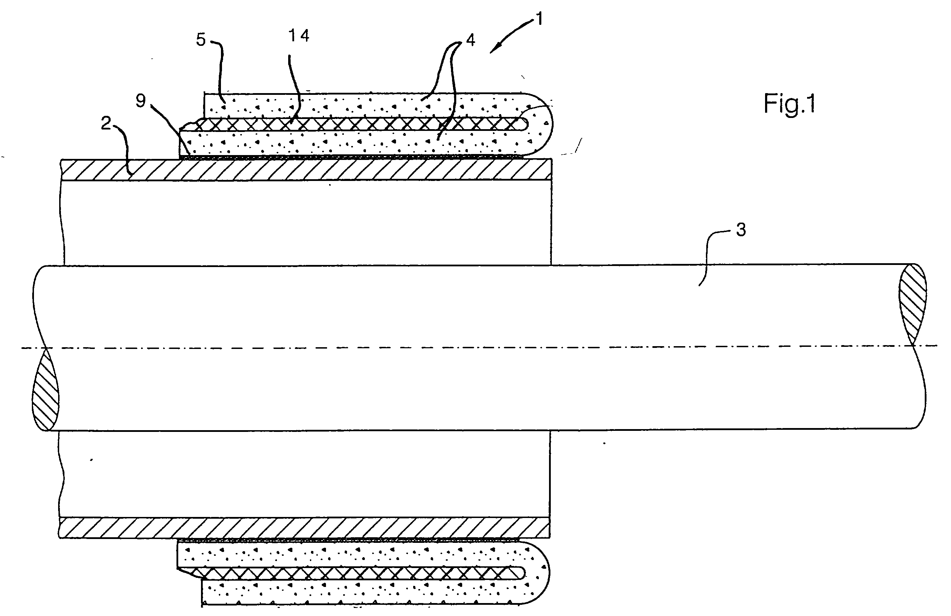

- Fig. 1: einen Schnitt durch eine auf dem Rohrende angeordnete Kaltschrumpfmuffe vor dessen Verbindung mit einem Kabel,
- Fig. 2: eine der Fig. 1 entsprechende Darstellung der Kaltschrumpfmuffe mit deren umgestülpten Ende zwischen zwei Hülsen, und
- Fig. 2a: eine der Fig. 2 entsprechende Darstellung einer Kaltschrumpfmuffe nach der Verbindung mit dem Kabel.

Die erfindungsgemäße Vorrichtung dient zum Abdichten eines Schutzrohres 2 gegen eine durch das Schutzrohr 2 führende Leitung, wie sie durch ein Rohr oder ein Kabel 3, das in der Zeichnung dargestellt ist, gebildet sein kann.

Verwendung findet diese Vorrichtung beispielsweise bei der Durchführung der Leitung durch eine Wandöffnung, wobei das Schutzrohr 2 dann ein in die Wandöffnung einsetzbares Futterrohr ist. Die Vorrichtung weist eine am Rohrende des Schutzrohres 2 angeordnete Schrumpfmuffe 1 auf, die einen Kaltschrumpfschlauch 4 besitzt, der am einen Ende außen auf dem Schutzrohr 2 sitzt. Der Kaltschrumpfschlauch 4 ist an einem Ende umgestülpt. Das umgestülpte Ende 5 ist gleitfähig auf dem nicht umgestülpten, außen auf dem Schutzrohr 2 sitzenden Ende gelagert. Zur Verminderung der Reibung ist ein Gleitmittel 14 zwischen den beiden Enden des Kaltschrumpfschlauches 4 vorgesehen. Die Herstellung der Verbindung von dem Schutzrohr 2 und dem Kabel 3 erfolgt, indem das umgestülpte Ende 5 des Kaltschrumpfschlauches 4 von Hand in Richtung des Rohrendes gezogen wird.

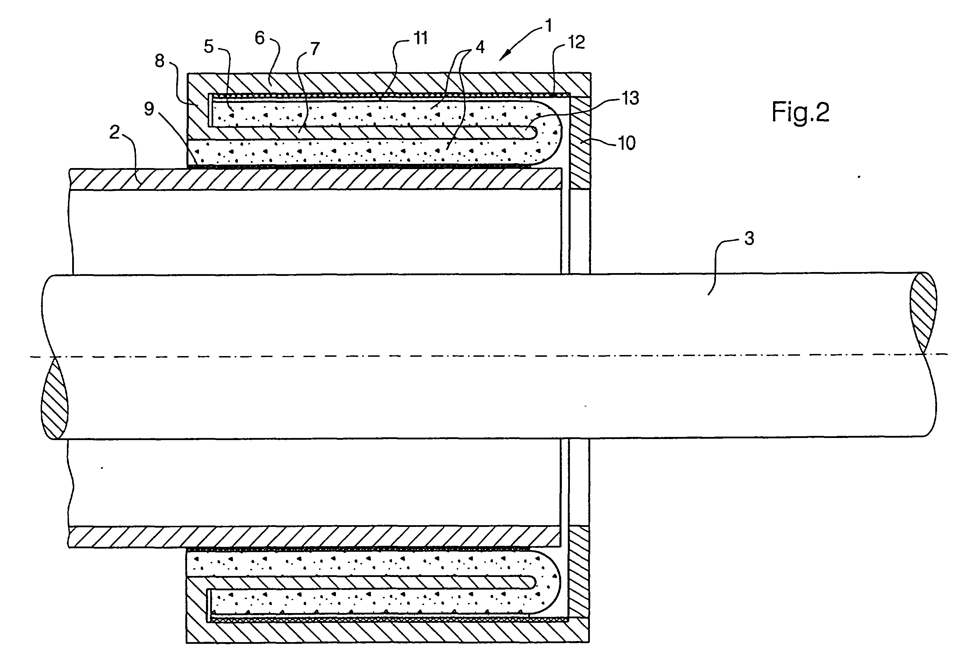

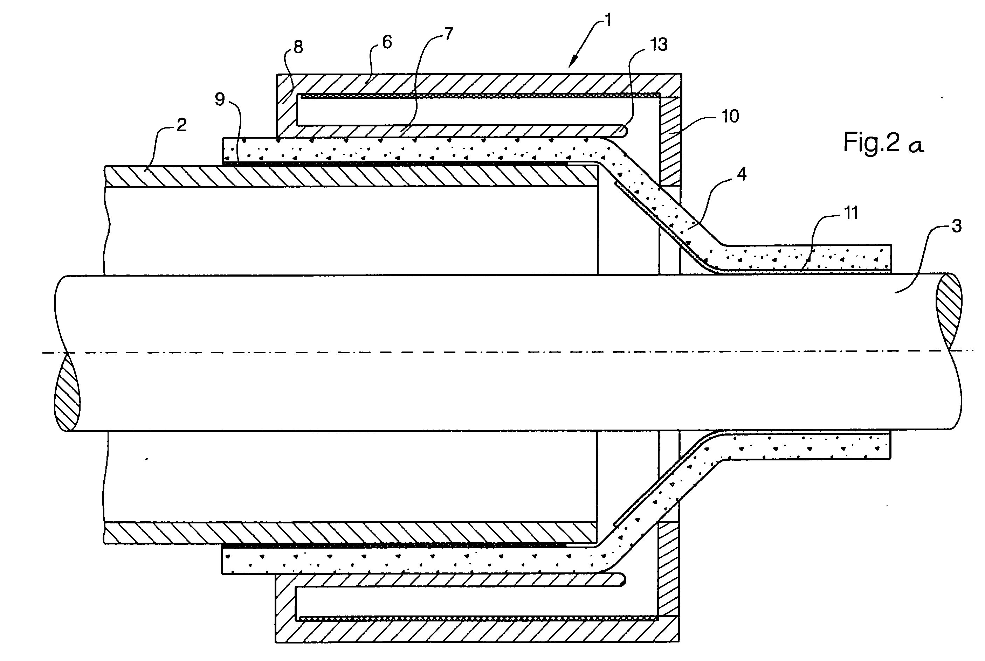

In der in Fig. 2 gezeigten Ausführungsform ist das umgestülpte Ende 5 gleitfähig zwischen zwei Hülsen 6,7 gelagert. Die Materialwahl von den Hülsen 6,7 und dem Kaltschrumpfschlauch 4 ist so getroffen, daß die Reibung zwischen ihnen möglichst gering ist, damit der Kaltschrumpfschlauch 4 auch im gespannten Zustand ohne die Verwendung des Gleitmittels 14, die gleichfalls möglich ist, auf den Hülsen 6,7 gleitet. Das umgestülpte Ende 5 des Kaltschrumpfschlauches 4 ist durch die innere Hülse 7 in einem gedehntem Zustand gehalten, so daß der Kaltschrumpfschlauch 4 unter mechanischer Spannung steht.

Die beiden Hülsen sind an der den freien Enden des Kaltschrumpfschlauches 4 zugewandten Seite durch einen Ring 8 miteinander verbunden, wobei diese miteinander einstückig ausgeführt sind. Der dem Schutzrohr 2 anliegende Teil des Kaltschrumpfschlauches 4 ist durch einen Kleber 9 fest mit dem Schutzrohr 2 verklebt.

Die äußere Hülse 6 steht auf der Seite des Rohrendes über die innere Hülse 7 über, wobei in die äußere Hülse 6 ein Abdeckring 10 eingesetzt ist, der am Rohrende anliegt, ohne in die Öffnung des Schutzrohres 2 hineinzuragen. Der Abdeckring 10 kann durch ein Gewinde mit der äußeren Hülse 6 verbunden oder eingeklebt sein.

Auf dem umgestülpten Teil 5 des Kaltschrumpfschlauches 4 ist auf der im umgestülpten Zustand dem Schutzrohr 2 abgewandten Seite eine Dichtmasse 11 angeordnet. Zwischen der Dichtmasse 11 und der äußeren Hülse 6 ist eine Abdeckfolie 12 vorgesehen, die an der dem Abdeckring 10 zugewandten Seite der äußeren Hülse 6 mit dieser verbunden ist. Der Abdeckring 10 bildet mit der äußeren Hülse 6 eine Sichtblende, wenn das Schutzrohr 2 in die Öffnung einer nicht dargestellten Wand eingesetzt ist.

In Fig. 2a ist der Endzustand der Verbindung des dargestellten Schutzrohres 2 mit dem Kabel 3 zu sehen. Dieser wird erreicht, indem ausgehend von der in Fig. 2 dargestellten Anordnung die Einheit von äußerer und innerer Hülse 6,7 sowie dem Ring 8 in der Zeichnung nach rechts bewegt wird. Dabei stößt die freie Kante 13 der inneren Hülse 7 gegen die Krümmung des umgestülpten Kaltschrumpfschlauches 4 und verschiebt die Biegung zum Ende des Kaltschrumpfschlauches 4, wobei sich dessen umgestülpter Teil 5 verringert. Erreicht und überschreitet die Biegung das Ende des Schutzrohres 2, so findet der Kaltschrumpfschlauch 4 dort keine Abstützung mehr, so daß sich der ehemals umgestülpte Teil 5 des Kaltschrumpfschlauches 4 dem Kabel 3 anlegt. Bei der Bewegung der äußeren Abdeckhülse 6 nach rechts wird von der Dichtmasse die Abdeckfolie 12 weggezogen. Diese Dichtmasse 11 liegt nach dem Zurückstülpen des Kaltschrumpfschlauches 4 dem Kabel 3 an und sorgt dort für eine bessere Abdichtung.

Ist der Kaltschrumpfschlauch 4 vollständig zurückgestülpt, werden durch den Abdeckring die Hülsen 6,7 wieder nach links verschoben, bis diese nahezu ihre Ausgangslage erreicht haben, in der sie eine zusätzliche Schutzfunktion für die Verbindung übernehmen.

## Patentansprüche

1. Vorrichtung zum Abdichten eines Schutzrohres (2) gegen eine durch das Schutzrohr (2) führende Leitung, wie Rohr, Kabel (3) oder dergl., mit einer das Schutzrohr (2) am Rohrende mit der Leitung verbindenden Schrumpfmuffe (1), insbesondere bei einer Vorrichtung zum Abdichten eines Schutzrohres (2) zur Durchführung der Leitung durch eine Wandöffnung, wobei das Schutzrohr (2) ein in die Wandöffnung einsetzbares Futterrohr ist, dadurch gekennzeichnet, daß die Schrumpfmuffe (1) einen Kaltschrumpfschlauch (4) aufweist, der am einen Ende außen auf dem Schutzrohr (2) sitzt, daß der Kaltschrumpfschlauch (4) am anderen Ende umgestülpt und das umgestülpte Ende (5) gleitfähig auf dem nicht umgestülpten, außen auf dem Schutzrohr (2) sitzenden Ende des Kaltschrumpfschlauches (4) gelagert ist.

2. Vorrichtung nach Anspruch 1, dadurch gekennzeichnet, daß zwischen dem umgestülpten (5) und dem nicht umgestülpten Ende des Kaltschrumpfschlauches (4) ein Gleitmittel (14) angeordnet ist.

3. Vorrichtung nach Anspruch 1 oder 2, dadurch gekennzeichnet, daß das umgestülpte Ende (5) zwischen zwei Hülsen (6,7) gleitfähig gelagert ist, die an der dem Rohrende abgewandten Seite miteinander verbunden sind.

4. Vorrichtung nach Anspruch 3, dadurch gekennzeichnet, daß die Hülsen (6,7) durch einen Ring (8) miteinander verbunden und der Ring (8) sowie die Hülsen (6,7) einstückig ausgeführt sind.

5. Vorrichtung nach einem der Ansprüche 1 bis 4, dadurch gekennzeichnet, daß der dem Schutzrohr (2) anliegende Teil des Kaltschrumpfschlauches (4) durch einen Kleber (9) fest mit dem Schutzrohr (2) verklebt ist.

6. Vorrichtung nach einem der Ansprüche 3 bis 5, dadurch gekennzeichnet, daß die äußere Hülse (6) auf der Seite des Rohrendes über die innere Hülse (7) übersteht.

7. Vorrichtung nach Anspruch 6, dadurch gekennzeichnet, daß in die äußere Hülse (6) ein am Rohrende anliegender Abdeckring (10) eingesetzt ist.

8. Vorrichtung nach einem der Ansprüche 1 bis 7, dadurch gekennzeichnet, daß auf dem umgestülpten Teil (5) des Kaltschrumpfschlauches (4) auf der im umgestülpten Zustand dem Schutzrohr (2) abgewandten Seite eine Dichtmasse (11) angeordnet ist.

9. Vorrichtung nach Anspruch 8, dadurch gekennzeichnet, daß zwischen der Dichtmasse (11) und der äußeren Hülse (6) eine Abdeckfolie (12) angeordnet ist, die mindestens an der dem Abdeckring (10) zugewandten Seite der äußeren Hülse (6) fest mit dieser verbunden ist.

10. Vorrichtung nach einem der Ansprüche 3 bis 9, dadurch gekennzeichnet, daß bei Einsatz des Schutzrohres (2) in die Wandöffnung der Abdeckring (10) mit der äußeren Hülse (6) eine Sichtblende bildet.
